# EUROPEAN PATENT SPECIFICATION

(11) **EP 3 376 831 B1**
(45) Date of publication and mention of the grant of the patent: **27.05.2020**
(21) Application number: 18159968.9
(22) Date of filing: 05.03.2018
(51) Int. Cl.: H05B 33/08

(54) **A LIGHTING DEVICE AND CORRESPONDING METHOD**
BELEUCHTUNGSVORRICHTUNG UND ZUGEHÖRIGES VERFAHREN
DISPOSITIF D'ÉCLAIRAGE ET PROCÉDÉ CORRESPONDANT

(30) Priority: 16.03.2017 IT 201700029018
(43) Date of publication of application: 19.09.2018
(73) Proprietor: OSRAM GmbH, 80807 München (DE); OSRAM S.P.A. - SOCIETA' RIUNITE OSRAM EDISON CLERICI, 20126 Milano (IT)
(72) Inventor: BARP, Marco, 31100 Treviso (IT); SCHICCHERI, Nicola, 35142 Padova (IT); BIZZOTTO, Alessandro, 31033 Castelfranco Veneto (Treviso) (IT)
(74) Representative: Bosotti, Luciano

(56) References cited:
- WO-A1-2013/114485
- US-A1- 2008 191 632
- US-A1- 2011 309 761

## Description

### Technical Field

The present description relates to lighting devices.

One or more embodiments may refer to lighting devices employing solid-state electrically powered light radiation sources, e.g. LED sources.

### Technological Background

The introduction and the ever-increasing diffusion of solid-state light radiation sources, such as LED sources, has opened new prospects in the implementation of lighting devices.

This regards e.g. the possible retrofitting of traditional light radiation sources, such as filament lampss, thus offering better performances from a mechanical, electrical, thermal and optical point of view.

In this respect, an interesting feature may consist in the possibility of inserting the lighting device into its mounting seat without the need of considering the power supply polarity (which is typically direct in the automotive sector), the consequent possibility being offered of achieving the lighting up of the lighting device irrespective of the polarity, so as to enable operation e.g. either with a positive supply voltage V_{DD} or with a negative supply voltage V_{SS}.

Another positive aspect may regard the compact size, the possibility being given e.g. of implementing lighting devices in the form of C5W bulbs, to be used in the automotive sector.

Document EP 3 099 141 A1, owned by the same Applicants, discloses a lighting device including the series connection of a plurality of light emitting diode cells, which may be activated by a supply voltage applied across said series connection, wherein said light emitting diode cells include a first diode and a second diode arranged in parallel with opposite polarities, so that the first diodes and the second diodes may be activated alternatively, as a function of the polarity of the voltage applied across said series connection of light emitting diode cells. In practice, said solution envisages the combination of two lighting devices, adapted to be activated alternatively according to the polarity of the voltage supply.

Solutions according to such prior art document may envisage, for example:
- the presence, on both sides of a substrate, of LED strings having opposite polarity, mutually connected in cascade and with the first and the last LED on each side adapted to receive the supply voltage,
- the presence, on each side of the substrate, of LEDs alternatively having opposite polarities, with one LED on one side connected to at least one LED on an opposite side (e.g. through an electrically conductive via traversing the substrate) so as to create a serpentine conductive path which connects the LEDs having the same polarity, the possibility being offered of obtaining a better distribution and uniformity of the emitted light radiation,
- the arrangement, on the same side of the substrate, of two LED strings having once again opposite polarity, the LEDs of each string being mutually connected in cascade, with the first and the last LED of each cascade being again adapted to receive the supply voltage.

As stated in the mentioned document, said solutions may offer various advantages.

However, at least in some applications, the choice of "doubling" the device may cause drawbacks as regards both cost and size.

In order to obtain the lighting up of a light radiation source irrespective of the polarity of the supply voltage, a rectifier circuit may be used (as shown e.g. in US 7 906 915 B2 in order to light up a pushbutton).

The possibility of using a rectifier circuit is also mentioned in EP 3 099 141 A1; however, such a solution is not always practicable, e.g. when a small-sized lighting source is desired.

A lighting device of the prior art is known, for instance, from US 2008/191632 A1. Also WO 2013/114485 A1 and US 2011/309761 A1 are of some interest for the invention.

### Object and Summary

One or more embodiments aim at overcoming the previously outlined drawbacks.

According to one or more embodiments, said object may be achieved thanks to a lighting device having the features specifically set forth in claim 1 that follows.

One or more embodiments may also refer to a corresponding method as per claim 8.

The claims are an integral part of the technical teaching provided herein with reference to embodiments.

One or more embodiments may enable achieving a LED lighting source which may be activated irrespective of the supply polarity.

One or more embodiments may employ light emitting diodes (LEDs) of the Chip Scale Package (CSP) type, which may have a smaller footprint than other LEDs, together with a radiation pattern having a width of 150° or more and a wide range of possible colour temperatures (CCTs) and colours.

In one or more embodiments, the light radiation sources (LEDs) may be mounted onto a planar support, such as e.g. a Printed Circuit Board (PCB), e.g. an FR4 PCB.

One or more embodiments may offer one or more of the following advantages:
- possibility of plugging in the lighting device without the need of considering the electrical polarity,
- small size.

### Brief Description of the Figures

One or more embodiments will now be described, by way of non-limiting example only, with reference to the annexed Figures, wherein:
- Figure 1 is a schematic view of a lighting device according to one or more embodiments,
- Figure 2 is an electric diagram exemplifying operating criteria of one or more embodiments,
- Figures 3, 4 and 5 exemplify various possible embodiments.

It will be appreciated that, for simplicity and clarity of illustration, the views in the various Figures may not be drawn to the same scale.

### Detailed Description

In the following description, various specific details are given to provide a thorough understanding of exemplary embodiments. One or more embodiments may be practiced without one or several specific details, or with other methods, components, materials, etc. In other instances, well-known structures, materials or operations are not shown or described in detail in order to avoid obscuring various aspects of the embodiments.

Reference throughout this specification to "one embodiment" or "an embodiment" means that a particular feature, structure, characteristic described in connection with the embodiment is included in at least one embodiment. Thus, the possible appearances of the phrases "in one embodiment" or "in an embodiment" in various places throughout this specification are not necessarily all referring exactly to the same embodiment. Furthermore, particular features, structures, or characteristics may be combined in any suitable manner in one or more embodiments.

The headings provided herein are for convenience only, and therefore do not interpret the extent of protection or scope of the embodiments.

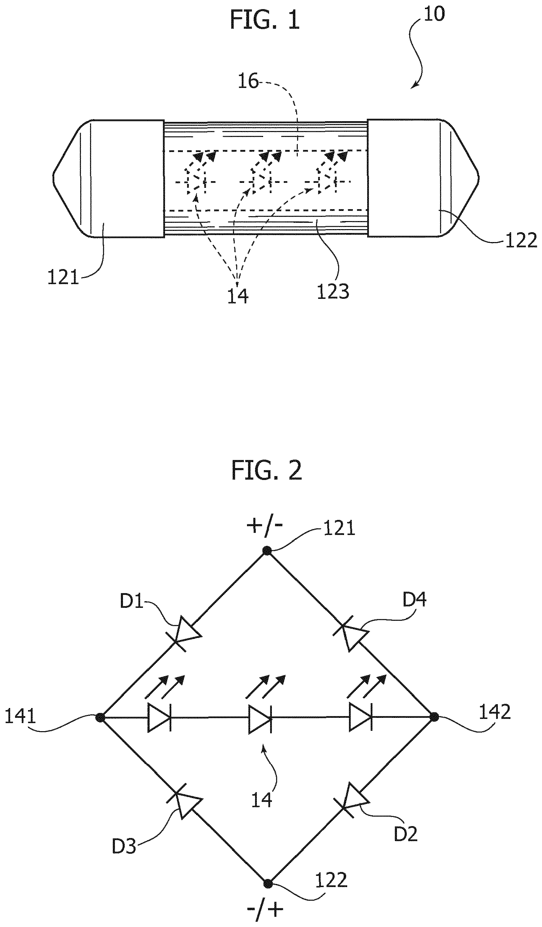

In Figure 1, reference 10 generally denotes a lighting device.

Possible applications of device 10 may include e.g. the automotive sector or the sector of interior lighting. In one or more embodiments, the lighting device may be adapted to be used e.g. as a retrofit device, for replacing a filament bulb e.g. as a C5W lamp.

Of course, the reference both to the possible use as a retrofit device and to said possible application sectors is merely exemplary and does not limit the embodiments.

In one or more embodiments, device 10 may be implemented (again by way of non-limiting example only) as a so-called festoon bulb, including an elongated rod adapted to be mounted into a housing including two power supply contacts (rheophores) 121, 122, which may have a cap shape; an e.g. tubular transparent (i.e. light-permeable) housing 123 (e.g. made of glass or transparent plastic material) extends between said caps.

In one or more embodiments (see e.g., for simplicity, Figure 1), device 10 may include a substrate 16 implemented as a Printed Circuit Board (PCB), e.g. an FR-4 PCB, adapted to extend between contacts 121 and 122 along housing 123, and to carry one or more electrically powered light radiation sources 14, the radiation whereof may diffuse outside housing 123.

In one or more embodiments, the light radiation source(s) may include solid-state sources, such as sources including Light Emitting Diodes (LEDs).

In the same way as the solutions disclosed in EP 3 099 141 A1, one or more embodiments may take into account that, e.g. according to the mounting position or direction of device 10, the supply voltage V (e.g. direct voltage) applied between contacts or rheophores 121, 122 may have opposite polarities, and therefore may be either a "positive" voltage or a "negative" voltage.

The problem of the polarity or direction of the supply voltage does not occur in the case of traditional filament lamps, the behaviour whereof does not vary as a function of polarity. On the contrary, the polarity of the supply voltage acquires importance in the case of LED sources 14, which are adapted to emit light when the supply voltage has a given polarity (positive anode with respect to the cathode), therefore exhibiting the electrical behaviour of a diode.

In one or more embodiments, the device 10 exemplified herein may include one or more light emitting diodes 14, set between a first terminal 141 and a second terminal 142.

The phrase "light emitting diode" is used herein in lieu of the more currently used acronym (LED) in order to highlight that such component(s) exhibit their ability to emit light radiation while having the electrical behaviour of a diode, i.e. of a component having an anode and a cathode and being adapted to be electrically conductive (and to emit light radiation) when subjected to a direct voltage, i.e. with the anode having a higher potential level than the cathode.

For the purposes of the present exemplary description, it will be assumed that the light emitting diode (s) 14 are set between the terminals 141 and 142, so as to be conductive (and to originate a light radiation emission) in the conduction direction from the first terminal 141 to the second terminal 142.

For example, in the presence of a plurality of diodes 14 it may be assumed that they are electrically series-connected in cascade, i.e. with the cathode of one diode connected to the anode of the subsequent diode in the cascade. It will be appreciated, moreover, that in one or more embodiments it is also possible to envisage the presence of a plurality of diodes 14 mutually connected in parallel (anode to anode and cathode to cathode) or of mixed series-parallel connections.

As previously stated, one or more embodiments may tackle with the problem that the contacts or rheophores 121, 122 may be exposed to a supply voltage V which may be either "positive", with contact 121 having a higher potential than contact 122, or "negative", with contact 11 having a lower potential than contact 122.

The polarity of the supply voltage (a negligible feature in the traditional filament lamps, the behaviour whereof remaining unvaried as a function of the polarity of the supply voltage) becomes relevant in the case of LED light radiation sources, which exhibit the electrical behaviour of a diode, as they operate and emit light when the supply voltage has a given polarity (the anode is positive with respect to the cathode).

One or more embodiments may envisage the presence of a rectifier circuit which is adapted, in one or more embodiments, to correspond to the general diagram exemplified in Figure 2, and therefore may include:
- first and second rectifier branches (e.g. two diodes D1 and D2) which extend from the first contact 121 towards the first terminal 141 and from the second terminal 142 towards the second contact 122, respectively, with the ability to be conductive in the direction from the first contact 121 to the first terminal 141 and from the second terminal 142 towards the second contact 122, and
- third and fourth rectifier branches (e.g. two diodes D3 and D4) which extend from the second contact 122 towards the first terminal 141 and from the second terminal 142 towards the first contact 121, respectively, having the ability to be conductive in the direction from the second contact 122 to the first terminal 141 and from the second terminal 142 towards the first contact 121.

It will be appreciated that, in one or more embodiments, said rectifier circuit may be implemented by "normal" diodes, i.e. diodes D1, D2, D3 and D4 which do not exhibit light emitting features.

From the observation of Figure 2 it is possible to infer that the related rectifier circuit is substantially similar to a bridge rectifier circuit, adapted to make the light emission diode or (all) the light emission diodes 14 conductive and therefore adapted to emit light radiation - irrespective of the polarity of the supply voltage applied between contacts 121 and 122 (e.g. in such a way that, irrespective of the polarity of the supply voltage applied between contacts 121 and 122, terminal 141 has a higher potential than terminal 142).

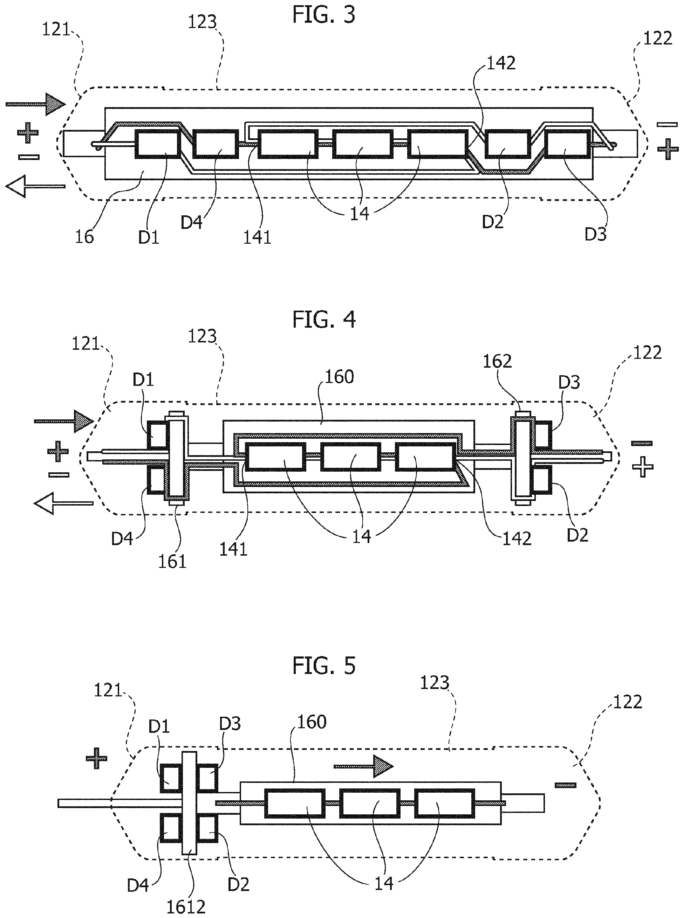

Figure 3 exemplifies one or more embodiments wherein the light emitting diodes 14 are arranged on a substrate 16 which may include, in one or more embodiments, a laminar substrate, e.g. a rod-shaped substrate which is substantially similar to a Printed Circuit Board (PCB), extending between contacts 121 and 122.

In one or more embodiments, substrate 16 may include a PCB currently denoted as FR4.

In one or more embodiments as exemplified in Figure 3, both the light emitting diodes 14 and the diodes D1, D2, D3, D4 of the rectifier circuit may be mounted on a common substrate 16, with the end contacts or rheophores 121 and 122 protruding from the ends of substrate 16.

Figures 4 and 5 exemplify embodiments wherein the substrate may include:
- a main portion 160, adapted to host the light emitting diodes 14,
- one or two appendix portions (161, 162 in Figure 4; 1612 in Figure 5) adapted to host the diodes D1, D2, D3, D4 of the rectifier circuit.

Figure 4 exemplifies one or more embodiments which may envisage two appendix portions 161, 162 which are adapted to host, respectively:
- the diodes D1, D2 to be connected to contact 121, and
- the diodes D2, D3 to be connected to contact 122.

On the other hand, Figure 5 exemplifies one or more embodiments which may envisage only one appendix portion 1612, adapted to host all four diodes D1, D2, D3, D4 of the rectifier circuit.

One or more embodiments may therefore enable the arrangement of the light emitting diodes 14 and of the diodes D1, D2, D3 and D4 of the rectifier circuit in two different portions of the substrate, therefore preventing the components of the rectifier circuit from hampering the propagation of the light radiation, in spite of their arrangement on the same surface or face of substrate 16 hosting the light emitting diodes 14.

In one or more embodiments, therefore, the substrate (at least in the portion hosting the light emitting diodes 14) may include a light-permeable material (e.g. a transparent material) in order to obtain a substantially uniform light radiation distribution around the longitudinal axis of device 10.

In one or more embodiments, the electrically conductive lines or tracks connecting the rectifier circuit to the light emitting diodes 14 (see e.g. Figures 3 and 4) may be rather thin and/or may be made of light permeable materials, so as not to affect light radiation propagation appreciably.

In one or more embodiments it is moreover possible to distribute the light emitting diodes 14 on both opposite faces of substrate 16, so as to obtain a substantially uniform light radiation distribution around the longitudinal axis of device 10.

In one or more embodiments, hosting the diodes of the rectifier circuit on one or more appendix portions 161, 162 or 1612 of the substrate may enable arranging said appendix portion(s) sidewise of the (e.g. central) portion 160 hosting the light emitting diodes 14.

As exemplified in Figures 4 and 5, the side appendix portion (s) 161, 162, 1612 may therefore be arranged within at least one or both contacts 121, 122, which may have a cap-like shape and may therefore be adapted to host the components of the rectifier circuit therein (thus protecting and concealing them from the outside).

In addition, the main portion 160 with the light emitting diodes 14 extends e.g. at the light permeable central portion 123 of device 10.

It will be remarked, moreover, that a solution as exemplified in Figure 5, having a main portion 160 carrying the light emitting diodes 14 and one (single) side appendix portion 1612 hosting the diodes D1, D2, D3, D4 of the rectifier circuit, may be used in lighting devices 10 wherein (unlike the exemplary embodiments of the Figures, wherein contacts 121 and 122 are arranged at opposite ends of device 10) the contacts 121 and 122 are arranged (e.g. in a cap-shaped element) at one end of device 10, near the side appendix portion 1612 hosting diodes D1, D2, D3, D4.

This may be the case, for example, of LED lighting devices which are adapted to reproduce the shape of traditional teardrop bulbs (e.g. halogen lamps) provided with threadlike contacts adapted to be inserted as a plug in respective holes or cavities of a mounting basis; therefore, once again, in the case of LED sources the problem may arise - unlike incandescent sources - of the polarity or direction of the supply voltage.

With reference, by way of example only, to the automotive sector, one or more embodiments as considered herein may be applied to lamps provided with a wedge socket, such as P27W, P27/5W, W21W, W21/5, W5W, W10W, W15/5W and other similar lamps. As a matter of fact, said socket may not guarantee the correct polarity of the circuit, because the lamp may be inserted in the reverse position into the socket.

In these devices, the rectifier diodes D1, D2, D3 and D4 may either be placed into the inner volume of the socket, and may be connected to the array of light emitting diodes 14, or they may be arranged near the light emitting diodes 14 while sharing the same support 16 of the latter.

Thus, one or more embodiments enable achieving a LED lighting device 10 adapted to exhibit, as far as its outer appearance is concerned, features substantially similar to a traditional bulb (e.g. a C5W lamp), the possibility being given to make the operation of device 10 independent from the mounting direction, i.e. independent from the direction of the supply voltage applied between contacts 121, 122.

One or more embodiments may therefore concern an electrically-powered lighting device (e.g. 10), including:
- a first (e.g. 121) and a second (e.g. 122) electrical supply contact,
- at least one light emitting diode (e.g. 14) set between a first terminal (e.g. 141) and a second terminal (e.g. 142), the at least one light emitting diode being conductive (with direct polarization, the anode having a higher potential than the cathode) from said first terminal towards said second terminal, and
- a rectifier circuit, including:
   - first (e.g. D1) and second (e.g. D2) rectifier branches, said first e second rectifier branches being conductive from said first supply contact towards said first terminal and from said second terminal towards said second supply contact, respectively, and
   - third (e.g. D3) and fourth (e.g. D4) rectifier branches, said third and fourth rectifier branches being conductive from said second supply contact towards said first terminal and from said second terminal towards said first supply contact, respectively.

In one or more embodiments, the diodes of the rectifier circuits may be "normal" diodes, e.g. diodes that do not emit light.

One or more embodiments may include a plurality of light emitting diodes set between said first terminal and said second terminal, the plurality of light emitting diodes being conductive from said first terminal towards said second terminal.

In one or more embodiments, said plurality of light emitting diodes may include a string of series-connected light emitting diodes.

One or more embodiments may include a housing (e.g. 123) light-permeable at least at said at least one light emitting diode.

One or more embodiments may include at least one substrate (e.g. 16 in Figure 3; 160, 161, 162 in Figure 4; 160, 1612 in Figure 5) with said at least one light emitting diode and said rectifier circuit arranged on said substrate.

In one or more embodiments, said at least one substrate may include light-permeable material at least at said at least one light emitting diode.

In one or more embodiments, said at least one substrate may include:
- a main portion (e.g. 160) with said at least one light emitting diode,
- at least one appendix portion (e.g. 161, 162; 1612) with said rectifier circuit (D1, D2, D3, D4).

One or more embodiments may include two appendix portions (e.g. 161, 162) in the substrate, with:
- said first and said fourth rectifier branch, and
- said second e said third rectifier branch, respectively.

In one or more embodiments, said at least one of said first and second supply contacts may include a containment member (e.g. a cap-shaped contact or a socket) hosting at least one rectifier branch of the rectifier circuit.

A method of providing an electrically-powered lighting device according to one or more embodiments may include:
- providing a first and a second electrical supply contact,
- setting at least one light emitting diode between a first terminal and a second terminal, the at least one light emitting diode being conductive from said first terminal towards said second terminal, and
- providing a rectifier circuit including:
   - first and second rectifier branches, said first and second rectifier branches being conductive from said first supply contact towards said first terminal and from said second terminal towards said second supply contact, respectively, and
   - third and fourth rectifier branches, said third and fourth rectifier branches being conductive from said second supply contact towards said first terminal and from said second terminal towards said first supply contact (121), respectively.

**LIST OF REFERENCE SIGNS**

| | |
|---|---|
| First supply contact | 121 |
| Second supply contact | 122 |
| Light emitting diode | 14 |
| First terminal | 141 |
| Second terminal | 142 |
| First rectifier branch | D1 |
| Second rectifier branch | D2 |
| Third rectifier branch | D3 |
| Fourth rectifier branch | D4 |
| Housing | 123 |
| Substrate | 16 |
| Substrate | 161 |
| Substrate | 162 |
| Substrate | 160 |
| Substrate | 1612 |

## Claims

1. An electrically-powered lighting device (10), including:
- a first (121) and a second (122) supply contact,
- at least one light emitting diode (14) set between a first terminal (141) and a second terminal (142), the at least one light emitting diode (14) conductive from said first terminal (141) towards said second terminal (142), and
- a rectifier circuit including:
- first (D1) and second (D2) rectifier branches, said first (D1) and second (D2) rectifier branches conductive from said first supply contact (121) towards said first terminal (141) and from said second terminal (142) towards said second supply contact (122), respectively, and
- third (D3) and fourth (D4) rectifier branches, said third (D3) and fourth (D4) rectifier branches conductive from said second supply contact (122) towards said first terminal (141) and from said second terminal (142) towards said first supply contact (121), respectively,
wherein the device includes at least one substrate (16; 160, 161, 162; 160, 1612) with said at least one light emitting diode (14) and said rectifier circuit (D1, D2, D3, D4) arranged on said at least one substrate, wherein said at least one substrate includes:
- a main portion (160) with said at least one light emitting diode (14),
- at least one appendix portion (161, 162; 1612) with said rectifier circuit (D1, D2, D3, D4),
wherein at least one of said first (121) and second (122) supply contacts includes a containment member hosting at least one of the rectifier branches of the rectifier circuit (D1, D2, D3, D4).

2. The lighting device (10) of claim 1, including a plurality of light emitting diodes (14) set between said first terminal (141) and said second terminal (142), the plurality of light emitting diodes (14) conductive from said first terminal (141) towards said second terminal (142).

3. The lighting device (10) of claim 2, wherein said plurality of light emitting diodes (14) includes a string of series-connected light emitting diodes (14).

4. The lighting device (10) of any of the previous claims, including a housing (123) being light-permeable at least at said at least one light emitting diode (14).

5. The lighting device (10) of claim 1, wherein said at least one substrate (16; 160, 161, 162; 160, 1612) includes light-permeable material at least at said at least one light emitting diode (14).

6. The lighting device (10) of claim 1, said at least one appendix portion including two appendix portions (161, 162) with:
- said first (D1) and said fourth (D4) rectifier branch, and
- said second (D2) and said third (D3) rectifier branch, respectively.

7. The lighting device (10) of claim 1, said at least one appendix portion only including one appendix portion (1612) with:
- said first (D1) and said fourth (D4) rectifier branch, and
- said second (D2) and said third (D3) rectifier branch, respectively,
arranged on opposite sides of the appendix portion (1612).

8. A method of providing electrically-powered lighting devices (10), the method including:
- providing a first (121) and a second (122) electrical supply contact,
- setting at least one light emitting diode (14) between a first terminal (141) and a second terminal (142), the at least one light emitting diode (14) conductive from said first terminal (141) to said second terminal (142), and
- providing a rectifier circuit including:
- first (D1) and second (D2) rectifier branches, said first (D1) e second (D2) rectifier branches conductive from said first supply contact (121) towards said first terminal (141) and from said second terminal (142) towards said second supply contact (122), respectively, and
- third (D3) and fourth (D4) rectifier branches, said third (D3) and fourth (D4) rectifier branches conductive from said second supply contact (122) towards said first terminal (141) and from said second terminal (142) towards said first supply contact (121), respectively,
wherein the method includes arranging said at least one light emitting diode (14) and said rectifier circuit (D1, D2, D3, D4) on at least one substrate (16; 160, 161, 162; 160, 1612), wherein said at least one substrate includes:
- a main portion (160) with said at least one light emitting diode (14),
- at least one appendix portion (161, 162; 1612) with said rectifier circuit (D1, D2, D3, D4),
wherein at least one of said first (121) and second (122) supply contacts includes a containment member hosting at least one rectifier branch of the rectifier circuit (D1, D2, D3, D4).

## Patentansprüche

1. Elektrisch betriebene Beleuchtungsvorrichtung (10),
beinhaltend:
- einen ersten (121) und einen zweiten (122) Versorgungskontakt,
- mindestens eine Leuchtdiode (14), die zwischen einem ersten Anschluss (141) und einem zweiten Anschluss (142) angeordnet ist, wobei die mindestens eine Leuchtdiode (14) von dem ersten Anschluss (141) zu dem zweiten Anschluss (142) leitend ist, und
- eine Gleichrichterschaltung beinhaltend:
- erste (D1) und zweite (D2) Gleichrichterzweige, wobei der erste (D1) und zweite (D2) Gleichrichterzweig vom ersten Versorgungskontakt (121) zum ersten Anschluss (141) bzw. vom zweiten Anschluss (142) zum zweiten Versorgungskontakt (122) leitend ist, und
- dritten (D3) und vierten (D4) Gleichrichterzweig, wobei der dritte (D3) und vierte (D4) Gleichrichterzweig von dem zweiten Versorgungskontakt (122) zu dem ersten Anschluss (141) bzw. von dem zweiten Anschluss (142) zu dem ersten Versorgungskontakt (121) leitend ist,
wobei die Vorrichtung mindestens ein Substrat (16; 160, 161, 162; 160, 1612) beinhaltet, auf dem die mindestens eine Leuchtdiode (14) und die Gleichrichterschaltung (D1, D2, D3, D4) angeordnet sind, wobei das mindestens eine Substrat beinhaltet:
- einen Hauptabschnitt (160) mit der mindestens einen Leuchtdiode (14),
- mindestens einen anhängenden Abschnitt (161, 162; 1612) mit der Gleichrichtschaltung (D1, D2, D3, D4),
wobei mindestens einer der ersten (121) und zweiten (122) Versorgungskontakte ein Eindämmungselement beinhaltet, das mindestens einen der Gleichrichterzweige der Gleichrichterschaltung (D1, D2, D3, D4) aufnimmt.

2. Beleuchtungsvorrichtung (10) nach Anspruch 1, beinhaltend eine Vielzahl von Leuchtdioden (14), die zwischen dem ersten Anschluss (141) und dem zweiten Anschluss (142) angeordnet sind, wobei die Vielzahl von Leuchtdioden (14) von dem ersten Anschluss (141) zu dem zweiten Anschluss (142) hin leitend ist.

3. Beleuchtungsvorrichtung (10) nach Anspruch 2, wobei die Vielzahl von Leuchtdioden (14) eine Kette von in Reihe geschalteten Leuchtdioden (14) beinhaltet.

4. Beleuchtungsvorrichtung (10) nach einem der vorhergehenden Ansprüche, beinhaltend ein Gehäuse (123), das zumindest an der mindestens einen Leuchtdiode (14) lichtdurchlässig ist.

5. Beleuchtungsvorrichtung (10) nach Anspruch 1, wobei das mindestens eine Substrat (16; 160, 161, 162; 160, 1612) lichtdurchlässiges Material an mindestens der mindestens einen Leuchtdiode (14) beinhaltet.

6. Beleuchtungsvorrichtung (10) nach Anspruch 1, wobei der mindestens eine anhängende Abschnitt zwei anhängende Abschnitte (161, 162) beinhaltet mit:
- dem ersten (D1) und dem vierten (D4) Gleichrichterzweig, bzw.
- dem zweiten (D2) und dem dritten (D3) Gleichrichterzweig.

7. Beleuchtungsvorrichtung (10) nach Anspruch 1, wobei mindestens ein anhängender Abschnitt nur einen anhängenden Abschnitt beinhaltet mit:
- dem ersten (D1) und dem vierten (D4) Gleichrichterzweig und
- dem zweiten (D2) und dem dritten (D3) Gleichrichterzweig, die jeweils auf gegenüberliegenden Seiten des anhängenden Abschnitts (1612) angeordnet sind.

8. Verfahren zum Bereitstellen elektrisch betriebener Beleuchtungsvorrichtungen (10), wobei das Verfahren Folgendes beinhaltet:
- Bereitstellen eines ersten (121) und eines zweiten (122) elektrischen Versorgungskontakts,
- Anordnen mindestens einer Leuchtdiode (14) zwischen einen ersten Anschluss (141) und einen zweiten Anschluss (142), wobei die mindestens eine Leuchtdiode (14) von dem ersten Anschluss (141) zu dem zweiten Anschluss (142) hin leitend ist, und
- Bereitstellen einer Gleichrichterschaltung beinhaltend:
- ersten (D1) und zweiten (D2) Gleichrichterzweig, wobei der erste (D1) und der zweite (D2) Gleichrichterzweig vom ersten Versorgungskontakt (121) zu dem ersten Anschluss (141) bzw. vom zweiten Anschluss (142) zu dem zweiten Versorgungskontakt (122) leitend ist, und
- dritten (D3) und vierten (D4) Gleichrichterzweig, wobei der dritte (D3) und vierte (D4) Gleichrichterzweig von dem zweiten Versorgungskontakt (122) zu dem ersten Anschluss (141) bzw. von dem zweiten Anschluss (142) zu dem ersten Versorgungskontakt (121) leitend ist,
wobei das Verfahren Anordnen der mindestens einen Leuchtdiode (14) und der Gleichrichterschaltung (D1, D2, D3, D4) auf mindestens einem Substrat (16; 160, 161, 162; 160, 1612) beinhaltet, wobei das mindestens eine Substrat umfasst:
- einen Hauptabschnitt (160) mit der mindestens einen Leuchtdiode (14),
- mindestens einen anhängenden Abschnitt (161, 162; 1612) mit der Gleichrichterschaltung (D1, D2, D3, D4), wobei mindestens einer der ersten (121) und zweiten (122) Versorgungskontakte ein Eindämmungselement beinhaltet, das mindestens einen Gleichrichterzweig der Gleichrichterschaltung (D1, D2, D3, D4) aufnimmt.

## Revendications

1. Un dispositif d'éclairage alimenté électriquement (10), comprenant :
- un premier (121) et un second (122) contact d'alimentation,
- au moins une diode électroluminescente (14) disposée entre une première borne (141) et une seconde borne (142), la au moins une diode électroluminescente (14) étant conductrice dans le sens allant de ladite première borne (141) à ladite seconde borne (142), et
- un circuit redresseur comprenant :
- une première (D1) et une seconde (D2) branche redresseuse, lesdites première (D1) et seconde (D2) branches redresseuses étant conductrices dans le sens allant dudit premier contact d'alimentation (121) à ladite première borne (141) et de ladite seconde borne (142) audit second contact d'alimentation (122), respectivement, et
- une troisième (D3) et une quatrième (D4) branche redresseuse, lesdites troisième (D3) et une quatrième (D4) branches redresseuses étant conductrices dans le sens allant dudit second contact d'alimentation (122) à ladite première borne (141) et de ladite seconde borne (142) audit premier contact d'alimentation (121), respectivement,
dans lequel le dispositif comprend au moins un substrat (16 ; 160, 161, 162 ; 160, 1612) avec ladite au moins une diode électroluminescente (14) et ledit circuit redresseur (D1, D2, D3, D4) agencés sur ledit au moins un substrat, ledit au moins un substrat comprenant :
- une partie principale (160) avec ladite au moins une diode électroluminescente (14),
- au moins une partie annexe (161, 162 ; 1612) avec ledit circuit redresseur (D1, D2, D3, D4),
dans lequel au moins l'un desdits premier (121) et second (122) contacts d'alimentation comprend un élément de confinement logeant au moins l'une des branches redresseuses du circuit redresseur (D1, D2, D3, D4).

2. Le dispositif d'éclairage (10) de la revendication 1, comprenant une pluralité de diodes électroluminescentes (14) disposées entre ladite première borne (141) et ladite seconde borne (142), la pluralité de diodes électroluminescentes (14) étant conductrices dans le sens allant de ladite première borne (141) à ladite seconde borne (142).

3. Le dispositif d'éclairage (10) de la revendication 2, dans lequel ladite pluralité de diodes électroluminescentes (14) comprend une chaîne de diodes électroluminescentes montées en série (14).

4. Le dispositif d'éclairage (10) de l'une des revendications précédentes, comprenant un boîtier (123) qui est perméable à la lumière au moins au niveau de ladite au moins une diode électroluminescente (14).

5. Le dispositif d'éclairage (10) de la revendication 1, dans lequel ledit au moins un substrat (16 ; 160, 161, 162 ; 160, 1612) comprend un matériau perméable à la lumière au moins au niveau de ladite au moins une diode électroluminescente (14).

6. Le dispositif d'éclairage (10) de la revendication 1, dans lequel ladite au moins une partie annexe comprend deux parties annexes (161, 162) avec :
- ladite première (D1) et ladite quatrième (D4) branche redresseuses, et
- ladite seconde (D2) et ladite troisième (D3) branche redresseuse, respectivement.

7. Le dispositif d'éclairage (10) de la revendication 1, dans lequel ladite au moins une partie annexe ne comprend qu'une seule partie annexe (1612) avec :
- ladite première (D1) et ladite quatrième (D4) branche redresseuse, et
- ladite seconde (D2) et ladite troisième (D3) branche redresseuse, respectivement,
agencées sur des côtés opposés de la partie annexe (1612) .

8. Un procédé d'obtention de dispositifs d'éclairage électriquement alimentés (10), le procédé comprenant :
- l'obtention d'un premier (121) et d'un second (122) contact d'alimentation électrique,
- la mise en place d'au moins une diode électroluminescente (14) entre une première borne (141) et une seconde borne (142), la au moins une diode électroluminescente (14) étant conductrice dans le sens allant de ladite première borne (141) à ladite seconde borne (142), et
- l'obtention d'un circuit redresseur comprenant :
- une première (D1) et une seconde (D2) branche redresseuse, lesdites première (D1) et seconde (D2) branches redresseuses étant conductrices dans le sens allant dudit premier contact d'alimentation (121) à ladite première borne (141) et de ladite seconde borne (142) audit second contact d'alimentation (122), respectivement, et
- une troisième (D3) et une quatrième (D4) branche redresseuse, lesdites troisième (D3) et une quatrième (D4) branches redresseuses étant conductrices dans le sens allant dudit second contact d'alimentation (122) à ladite première borne (141) et de ladite seconde borne (142) audit premier contact d'alimentation (121), respectivement,
dans lequel le procédé comprend l'agencement de ladite au moins une diode électroluminescente (14) et dudit circuit redresseur (D1, D2, D3, D4) sur au moins un substrat (16 ; 160, 161, 162 ; 160, 1612), ledit au moins un substrat comprenant :
- une partie principale (160) avec ladite au moins une diode électroluminescente (14),
- au moins une partie annexe (161, 162 ; 1612) avec ledit circuit redresseur (D1, D2, D3, D4),
dans lequel au moins l'un desdits premier (121) et second (122) contacts d'alimentation comprend un élément de confinement logeant au moins l'une des branches redresseuses du circuit redresseur (D1, D2, D3, D4).
